(19) **Europäisches Patentamt / European Patent Office / Office européen des brevets**

(11) **EP 4 370 471 B1**

(12) **EUROPEAN PATENT SPECIFICATION**

(45) Date of publication and mention of the grant of the patent:
**10.09.2025   Bulletin 2025/37**

(21) Application number: **22748041.5**

(22) Date of filing: **12.07.2022**

(51) International Patent Classification (IPC):
**C01G 53/00** (2025.01)

(52) Cooperative Patent Classification (CPC):
**C01G 53/42;** C01P 2004/32; C01P 2004/60;
C01P 2004/61; C01P 2006/12; Y02E 60/10

(86) International application number:
**PCT/EP2022/069469**

(87) International publication number:
**WO 2023/285464 (19.01.2023 Gazette 2023/03)**

(54) **METHOD FOR MAKING PRECURSORS OF CATHODE ACTIVE MATERIALS FOR LITHIUM ION BATTERIES**

VORLÄUFERN FÜR KATHODENAKTIVMATERIALIEN FÜR LITHIUMIONENBATTERIEN; VERFAHREN ZUR HERSTELLUNG DAVON

PRÉCURSEURS POUR MATÉRIAUX ACTIFS DE CATHODE POUR BATTERIES AU LITHIUM-ION; LEUR PROCÉDÉ DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.07.2021   EP 21186219**
**21.09.2021   EP 21198018**

(43) Date of publication of application:
**22.05.2024   Bulletin 2024/21**

(73) Proprietor: **BASF SE**
**67056 Ludwigshafen am Rhein (DE)**

(72) Inventors:
 • **BEIERLING, Thorsten**
  **67056 Ludwigshafen (DE)**
 • **FRISCHHUT, Sabine**
  **67056 Ludwigshafen (DE)**
 • **RAULS, Matthias**
  **67056 Ludwigshafen (DE)**
 • **METZGER, Lukas Karl**
  **67056 Ludwigshafen (DE)**
 • **WEIGUNY, Sabine**
  **67056 Ludwigshafen (DE)**
 • **LENNARTZ, Michael**
  **67056 Ludwigshafen (DE)**

 • **BERK, Rafael Benjamin**
  **67056 Ludwigshafen (DE)**

(74) Representative: **BASF IP Association**
  **BASF SE**
  **GBI - Z078**
  **67056 Ludwigshafen (DE)**

(56) References cited:
**WO-A1-2020/175925**

 • **LENA TROTOCHAUD ET AL: "Nickel–Iron Oxyhydroxide Oxygen-Evolution Electrocatalysts: The Role of Intentional and Incidental Iron Incorporation", JOURNAL OF THE AMERICAN CHEMICAL SOCIETY, vol. 136, no. 18, 7 May 2014 (2014-05-07), pages 6744 - 6753, XP055600118, ISSN: 0002-7863, DOI: 10.1021/ja502379c**
 • **D. S. HALL ET AL: "Nickel hydroxides and related materials: a review of their structures, synthesis and properties", vol. 471, no. 2174, 24 December 2014 (2014-12-24), GB, pages 1 - 65, XP055373108, ISSN: 1364-5021, Retrieved from the Internet <URL:http://rspa.royalsocietypublishing.org/content/royprsa/471/2174/20140792.full.pdf> DOI: 10.1098/rspa.2014.0792**

**Description**

The present invention is directed towards a process for making a particulate (oxy)hydroxide of TM wherein TM represents a combination of metals, and wherein TM comprises nickel and at least one metal selected from cobalt and aluminum and manganese, wherein said process comprises the steps of:

(a) combining an aqueous slurry of metallic nickel and at least one metal selected from aluminum and transition metals other than nickel with an oxidant selected from oxygen, peroxide and nitrate in a first reaction vessel or in a first group of reaction vessels at a temperature of from 5° to 40°C,

(b) transferring aqueous reaction medium from step (a) to a second reaction vessel, wherein said second reaction vessel contains a slurry of a hydroxide of TM, wherein the pH value in step (b) is higher than in step (a) and the temperature is in the range of from 45° to 80°C, thereby forming and growing particles of hydroxide of TM,

(c) removing the particles from step (b) from the liquid by a solid-liquid separation method, and drying the particles,

(d) returning liquid phase obtained in step (c) to the first reaction vessel.

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides.

The cathode material is of crucial importance for the properties of a lithium ion battery. Lithium-containing mixed transition metal oxides have gained particular significance, for example spinels and mixed oxides of layered structure, especially lithium-containing mixed oxides of nickel, manganese and cobalt; see, for example, EP 1 189 296. Such lithium-containing mixed oxides of nickel, manganese and cobalt are generally prepared in a two-stage process. In a first stage, a sparingly soluble salt of the transition metal(s) is prepared by precipitating it from a solution, for example a carbonate or a hydroxide. This sparingly soluble compound is in many cases also referred to as a precursor. In a second stage, the precursor is mixed with a lithium compound, for example $Li_2CO_3$, LiOH or $Li_2O$, and calcined at high temperatures, for example at 600 to 1100°C. WO 2020/175925 A1 represents another of such generally known preparation process.

In the precursor manufacturing process, when performed by (co-)precipitation, usually the sulfates of transition metals such as nickel, cobalt and manganese are used as starting materials. This leads, however, to the formation of stoichiometric amounts of alkali metal sulfates. The stoichiometric amounts of sulfate are undesired by-products that need to be disposed of.

In WO 2019/191837, a process is disclosed wherein cathode active materials are made from precursors that are made by oxidation of metals and simultaneous precipitation. The process, however, leads to disadvantages when manganese is present because under the prevailing alkaline conditions, manganese may be precipitated as $MnO_2$ that is not incorporated well into the precursor. In addition, the magnetic separation as suggested for the removal of unreacted metals does not work for many materials such as, but not limited to aluminum and manganese. It was therefore an objective of the present invention to provide a process for precursor manufacture that avoids the formation of stoichiometric amounts of alkali metal sulfate and that further reduces the formation of residues of unreacted metals that cannot be removed magnetically. In particular, it was the objective to provide a process that allows manganese as a constituent.

Inventive process or process according to the (present) invention. The inventive process may be carried out as a batch process or as a continuous or semi-batch process.

The inventive process comprises steps (a) to (d), hereinafter also referred to as (a), (b), (c) or (d), respectively. Steps (a) to (d) shall be described in more detail below.

The inventive process is suitable for making a particulate (oxy)hydroxide of TM wherein TM represents metals, and wherein TM comprises nickel and at least one metal selected from cobalt and aluminum and manganese. Preferably, TM comprises at least 50 mol-% nickel. More preferably, TM comprises at least 50 mol-% nickel and at least one of manganese and aluminum.

In one embodiment of the present invention, particulate (oxy)hydroxide of TM is selected from hydroxides and oxyhydroxides of TM wherein TM is a combination of metals according to general formula (I)

$$(Ni_aCo_bMn_c)_{1-d}M_d \qquad (I)$$

with

a being in the range of from 0.6 to 0.95, preferably 80 to 94,
b being in the range of from zero to 0.2, preferably 0.01 to 0.12,
c being in the range of from zero to 0.2, preferably 0.02 to 0.10,
d being in the range of from zero to 0.1,

M is selected from Mg, Al, Ti, Zr, Mo, W, Al, Mg, Nb, and Ta, and combinations of at least two of the foregoing, preferably, M is selected from Mg and Al.

$$a + b + c = 1, \text{ and } c + d > \text{zero.}$$

Said particulate (oxy)hydroxide of TM may contain traces of further metal ions, for example traces of ubiquitous metals such as sodium, calcium, iron or zinc, as impurities but such traces will not be taken into account in the description of the present invention. Traces in this context will mean amounts of 0.05 mol-% or less, referring to the total metal content of TM.

Particulate (oxy)hydroxide of TM is in particulate form. In one embodiment of the present invention, the mean particle diameter (D50) of particulate (oxy)hydroxide of TM is in the range of from 2 to 20 $\mu$m, preferably 3 to 16 $\mu$m, more preferably 7 to 14 $\mu$m. The mean particle diameter (D50) in the context of the present invention refers to the median of the volume-based particle diameter, as can be determined, for example, by light scattering. In one embodiment, the particulate (oxy)hydroxide of TM has a monomodal particle diameter distribution. In other embodiments, the particle distribution of the particulate (oxy)hydroxide of TM may be bimodal, for example with one maximum in the range of from 1 to 5 $\mu$m and a further maximum in the range of from 7 to 16 $\mu$m. Monomodal is preferred.

In another embodiment of the present invention the mean particle diameter (D50) of particulate (oxy)hydroxide of TM is in the range of from 1 to 7 $\mu$m, preferably 2 to 6 $\mu$m, more preferably 3 to 5 $\mu$m.

The particle shape of the secondary particles of said particulate (oxy)hydroxide of TM is preferably spheroidal, that are particles that have a spherical shape. Spheroidal shall include not just those which are exactly spherical but also those particles with a form factor in the range of from 0.7 to 1 and an axis ratio of the bounding box in the range of from 1.00 to 1.25. To determine the axis ratio of the bounding box of a specific particle, the smallest possible, rectangular bounding box is set around the top view SEM image of a particle. The axis ratio is calculated from the length of the two sides $a_1$ and $a_2$ (with $a_1 \geq a_2$) by: axis ratio of the bounding box = $a_1/a_2$.

While a perfect sphere would possess an axis ratio of the bounding box of 1.0, all deviations from perfect sphericity lead to an axis ratio > 1.0.

To determine form factor and axis ratio of samples, both properties are first determined for at least 50 individual particles of each sample and then averaged. The form factor of the individual particles is calculated from the perimeter and area determined from top view SEM images: Form factor = $(4\pi \cdot \text{area})/(\text{perimeter})^2$. While a perfect sphere would possess a form factor of 1.0, any deviation from perfect sphericity leads to form factors less than 1.0.

In one embodiment of the present invention, said particulate (oxy)hydroxide of TM is comprised of secondary particles that are compose of primary particles. Preferably, said precursor is comprised of spherical secondary particles that are agglomerates of primary particles. Even more preferably, said precursor is comprised of spherical secondary particles that are agglomerates of plate-shaped, rod-shaped or needle-shaped primary particles or platelets.

In the present invention, said particulate (oxy)hydroxide of TM comprises 0.1 to 10 mol-% referring to TM, of metal in the oxidation state zero, for example nickel, said metal being a constituent of TM. Said metal in the oxidation state of zero and especially nickel is incorporated in the form of small particles of a maximum size of the particulate (oxy)hydroxide itself.

In one embodiment of the present invention, said particulate (oxy)hydroxide of TM may have a particle diameter distribution span in the range of from 0.5 to 0.9, the span being defined as [(D90) - (D10)] divided by (D50), all being determined by LASER analysis. In another embodiment of the present invention, said precursor may have a particle diameter distribution span in the range of from 1.1 to 1.8.

In one embodiment of the present invention the specific surface (BET) of said precursor is in the range of from 2 to 10 $\text{m}^2/\text{g}$ or even 15 to 100 $\text{m}^2/\text{g}$, determined by nitrogen adsorption, for example in accordance with to DIN-ISO 9277:2003-05.

In one embodiment of the present invention, in XRD spectra of said particulate (oxy)hydroxides of TM, the intensity of the reflex at the angle of $2\theta = 20.11 \pm 0.5°$ divided by the intensity of the peaks at angle $2\theta = 8.86 \pm 0.5°$ and $2\theta = 15.08 \pm 0.5°$ from MoK$\alpha$1 X-Ray diffraction is in the range from 0.01 to 0.25.

The inventive process is carried out in an apparatus that comprises at least two reaction vessels hereinafter referred to as first reaction vessel and as second reaction vessel. Both reaction vessels are connected to each other, for example through a pipe system, preferably through at least two independent pipes. In addition, the apparatus contains at least one device for solid-liquid separation, for example by filtration or centrifuge, preferably by filtration.

In one embodiment of the present invention, the inventive process is carried out in an apparatus that comprises at least two tank reactors connected to each other with two pipes that are constructed in a way that slurry or aqueous solution may be transferred from a first reaction vessel to a second reaction vessel, and another pipe connected with a device for solid-liquid separation, and another pipe for transferring the liquid phase resulting from the solid-liquid-separation to the first reaction vessel, in whole or in part.

In one embodiment of the present invention, the second reaction vessel is equipped with a device through which liquid phase may be removed, for example a clarifier, a candle filter or a membrane. Said liquid phase may then be returned to step (a), in whole or in part.

In one version of the present invention, the first reaction vessel is embodied as a group of vessels, for example two or three tank reactors. In each reaction vessel of such group a reaction according to step (a) may be carried out, with the same combination of TM or with certain members only. The aqueous reaction media obtained in the various reaction vessels are than combined in order to subject them to step (b).

In one embodiment of the present invention, said first reaction vessel may have a device for discharging slurry or aqueous solution. For example, slurry or aqueous solution may be discharged through overflows or valves to the second reaction vessel.

In step (a), an aqueous slurry of metallic nickel and at least one metal selected from aluminum and transition metals other than nickel is combined with an oxidant selected from oxygen and nitrate in the first reaction vessel. Preferably, such transition metals other than nickel are selected from cobalt and manganese and combinations of cobalt and manganese.

The metallic nickel may be in the form of powder, sheets, turnings, briquettes, pellets, rounds, lumps, and electrode fragments. Powders may have an average particle diameter in the range of from 0.01 to 1 mm. Sheets may have a thickness in the range of from 0.1 t 5 mm and a length and breadth that may be identical or different, each in the range of from 2 cm to 10 meters, in particular from 2 to10 cm. Turnings for the purposes of the present invention may have a thickness of from 0.1 to 1 mm, a width 1 mm to 5 mm and a length of from 1 cm to 20 cm. Lumps may have a diameter in the range of from 1 mm to 5 cm but with an irregular shape. Electrode fragments may have a thickness in the range of from 0.5 to 7 mm and an average diameter from 10 to 40 mm.

Rounds may have a diameter of 2 to 3 cm and a height of approximately 0.8 to 1.5 cm; briquettes with dimensions of: length from 2 to 5 cm, breadth from 1 to 4 cm, height from 1 to 3 cm, and length bigger than height. For the purposes of the present invention, pellets have a diameter from 1 to 2 cm.

Aluminum and transition metals other than nickel may be in the form of powders, sheets, turnings, or lumps, with dimensions as defined above in the context of nickel.

The molar ratio of nickel to aluminum or transition metal, as the case may be, preferably corresponds to the stoichiometry of the desired product. In other embodiments, metals more noble than nickel are employed in a molar excess.

In one embodiment of step (a), the weight ratio of water to nickel and metals of TM other than nickel is in the range of from 20:1 to 0.1:1, preferably 10:1 to 0.5:1.

In step (a), an oxidant is present. Said oxidant is selected from oxygen and nitrate. nitrate may be introduced as alkali metal nitrate or as nitric acid. Oxygen is preferably present in the form of air.

In one embodiment of the present invention, step (a) is performed in the absence of oxygen, and the oxidation is performed by the use of alkali metal nitrate, for example sodium nitrate or potassium nitrate, or by the use of nitric acid or of a combination of nitric acid and alkali metal nitrate. Absence of oxygen shall mean a gas atmosphere with less than 10 ppm by vol. oxygen.

In one embodiment of the present invention a gas selected from oxygen, air or nitrogen is purged through the reaction medium in step (a) and nitrogen is purged through the reaction medium in step (b). In another embodiment of the invention, the gas flow rates are different in step (a) and step (b).

It is preferred to perform a mixing operation in step (a), for example stirring. On laboratory scale, shaking is possible as well.

Step (a) is performed at a temperature in the range of from 5 to 40°C, preferably in the range of from 15 to 35°C.

In one embodiment of the present invention, step (a) is performed at a pressure in the range of from 0.5 bar (abs.) to 10 bar (abs.), preferably - for simplicity reasons - at ambient pressure or at a pressure that is slightly higher than ambient pressure, for example 1 to 20 mbar higher than ambient pressure.

The duration - in case of a continuous mode the average hydraulic residence time - of aqueous medium in step (a) is in the range of from 30 minutes to 5 hours.

In one embodiment of the present invention, wherein step (a) is performed in the presence of a complexing agent selected from ammonia, borate, polyborate, glycine, tartrate, citrate, and oxalate. In a particular embodiment of the present invention, step (a) is performed in the presence of ammonia and a complexing agent selected from borate, polyborate, glycine, tartrate, citrate, and oxalate. In such embodiments, such complexing agent other than ammonia is present in the range of from 0.1 to 10 mol/mol nickel.

It is preferred to perform the inventive process in the presence of ammonia. Ammonia may be used as complexing agent and for pH adjustment. In addition, when nitrate is used as oxidant, ammonia is formed during step (a).

In one embodiment of the present invention, step (a) is performed in a single reaction vessel, for example in a stirred tank reactor. In another embodiment of the present invention, step (a) is performed in a group of reaction vessels, for example in two or up to 10 reaction vessels, also referred to as first reaction vessels or first group. Said first group of reaction vessels may comprise two or more tank reactors, for example up to 10 tank reactors. In each of the reaction vessels of the first group, the same or different metals of TM may be treated according the conditions according to step (a). For example, in one rection vessel, nickel is combined with an oxidant at a temperature of from 5° to 40°C in the presence of ammonia, and in another reaction vessel, cobalt or manganese or aluminum is combined with an oxidant at a temperature of from 5° to 40°C in the presence of ammonia.

By performing step (a), an aqueous reaction medium is obtained. Said aqueous reaction medium may be in the form of a solution or of a slurry. In particular, said aqueous reaction medium is free from seed particles that might lead to a precipitation of hydroxide of TM. In particular, said aqueous reaction medium is free from precipitated manganese dioxide particles. Preferably, said reaction medium has a pH value in the range of from 7.5 to 10.0.

In step (b), said aqueous reaction medium is transferred from the first reaction vessel to a second reaction vessel. Said second reaction vessel contains a slurry of a hydroxide of TM. The temperature, at which step (b) is carried out, is in the range of from 45 to 80°C, preferably 55 to 70°C. The pH value in step (b) and thus in the second reaction vessel is higher than in step (a) and thus in the first reaction vessel, for example by 0.5 to six units, preferably by 1 to 3 units. In step (b), particles of hydroxide of TM are formed and grown.

In one embodiment of the present invention, the pH value in step (a) is in the range of from 7.0 to 10.0 and the pH value in step (b) is in the range of from 9.0 to 13.0.

In embodiments wherein in step (a) the pH value is 10, the pH value in step (b) is higher, for example at least 10.5, preferably at least 11. In embodiments wherein the pH value in step (b) is 9.0, the pH value in step (a) is lower, for example at most 8.5, preferably at most 8.0. More preferably, the pH value in step (b) is in the range of from 10.5 to 13.

Although it is preferred to have as little oxygen in step (b) as possible, step (b) may be performed under an atmosphere that contains up to 500 ppm $O_2$, preferred are up to 50 ppm $O_2$, even more preferred are at most 10 ppm. In the context of step (b), ppm refers to parts per million by volume.

In the second reaction vessel, hydroxide of TM is precipitated. In part, such hydroxide is formed on existing particles of hydroxide of TM, such existing particles serving as seed. Partially, however, new particles are formed in the course of step (b).

In one embodiment of the present invention, seed particles are added to the reaction vessel in step (b). In another embodiment of the present invention, seed particles are generated by attrition of existing secondary particles in the reactor in step (b) by integrated high shear equipment like rotor-stator devices.

In one embodiment of the present invention, step (b) is performed at a pH value in the range from 9 to 13, preferably in the range of 9.5 and 12.5. The limits are selected in a way that the pH value in step (b) is higher than in step (a).

In one embodiment of the present invention, metal particles are removed from the aqueous reaction medium of step (a) by filtration or sedimentation or magnetic separation and returned to the first reaction vessel. Magnetic separation steps will work for ferromagnetic metals such as cobalt and nickel. Said metal particles may have the size of metal as introduced in step (a) or be smaller, due to a partial but incomplete reaction.

In one embodiment of the present invention, step (b) is performed at a pressure in the range of from 0.5 bar (abs.) to 10 bar (abs.), preferably - for simplicity reasons - at ambient pressure or at a pressure that is slightly higher than ambient pressure, for example 1 to 20 mbar higher than ambient pressure.

The duration - in case of a continuous mode the average hydraulic residence time - of aqueous medium in step (b) is in the range of from 30 minutes to 15 hours.

It is preferred to prefer a mixing operation in the course of step (b), for example stirring.

In one embodiment of the present invention, the temperature during step (a) is lower than in step (b), for example by at least 5°C, preferably by at least 10°C. The maximum temperature difference of steps (a) and (b) may be in the range of from 40°C. In other embodiments, the temperature in steps (a) and (b are the same.

In the course of step (b), particulate hydroxide of TM slurried in its mother liquor, a liquid phase, is freshly formed, and existing particles of hydroxide of TM are grown. Without wishing to be bound by any theory, we believe that the higher the pH value in step (b) the higher is the share of freshly formed particles, and the lower is the share of particle growth. We further observe that the lower the pH value in step (b), the higher is the share of particle growth and the lower is the part of new particle formation.

In one embodiment of the present invention, neither in step (a) nor in step (b) any alkali metal hydroxide addition is required.

In one embodiment of the present invention, at least one compound of manganese or aluminum is added in step (b). Examples of compounds of manganese are $MnSO_4$ or $MnCl_2$ or preferably manganese(II) acetate or even more preferably $Mn(NO_3)_2$, water of hydratization being neglected. Examples of compounds of aluminum are $Al_2(SO4)_3$, $KAl(SO_4)_2$, $Al(NO_3)_3$, and $NaAl(OH)_4$.

Step (c) includes removing the particles from step (b) from the liquid by a solid-liquid separation method and drying the particles so obtained. In particular, step (c) includes withdrawing slurry formed in step (b) and subjecting said slurry to a solid-liquid separation, for example decantation or centrifuge or filtration, filtration being preferred. Preferred embodiments of solid-liquid separation are filter presses and belt filters.

In a preferred embodiment of step (c), as solid phase, a filter cake is formed. As liquid phase, filtrate is obtained.

In one embodiment of the present invention, purification steps may be performed on the filter cake, for example rinsing with water or with aqueous ammonia, aqueous alkali metal solution or aqueous alkali carbonate solution. Magnetic separation steps may be performed as well, before or after drying, to remove unreacted nickel or cobalt or other ferromagnetic impurities like iron.

In preferred embodiments, the precursor is dried, for example under air at a temperature in the range of from 80 to 140°C. In other preferred embodiments, the precursor is dried, for example under air at a temperature in the range of from 80 to 140°C and then under air at a temperature in the range of from 150 to 600°C.

In the course of step (c), the hydroxide of TM may be dried in one or several sub-steps, for example in at least two sub-steps at different temperatures, for example 80 to 150°C in sub-step 1 and 165 to 600°C in sub-step 2. Preferably, the residual moisture content of (oxy)hydroxides of TM is 5% by weight or below, for example 0.01 to 0.2% by weight. In the context of the present invention, the moisture content is calculated as g $H_2O$ per 100 g of (oxy)hydroxide of TM. In this case, $H_2O$ may be bound chemically as hydroxyl group, or be bound by physisorption. It is preferred that the residual moisture in hydroxide of TM is low, for example 0.1 to 5 % by weight.

In one embodiment of the present invention, sub-step 1 is preferably performed in a spray dryer, in a fluidized-bed dryer, in a spin-flash dryer or in a contact dryer such as a paddle-dryer or pan-dryer. Sub-step 2 may be performed in a rotary kiln, a roller heath kiln or in a box kiln.

Said drying is performed in the presence of air, and this may lead to a partial oxidation. Especially manganese - if present - is partially oxidized to an oxidation stage of (+III) or even (+IV).

Step (d) includes returning liquid phase obtained in step (c) to the first reaction vessel, in whole or in part. In one embodiment of the present invention, 80 to 99 vol.-% of the liquid is returned to the first reaction vessel.

By performing the inventive process, precursors of an excellent morphology may be obtained, and the generation of by-products such as solution of $Na_2SO_4$ is extremely low. When combined with a source of lithium, for example LiOH or $Li_2CO_3$, and thermally treated at 600 to 1,000°C in e.g., a rotary kiln or a roller hearth kiln, cathode active materials with good properties and morphology are obtained.

Another aspect of the present invention is related to particulate (oxy)hydroxides, hereinafter also referred to as inventive precursors. Inventive precursors are particulate (oxy)hydroxides of TM, wherein TM comprises nickel and at least one metal selected from cobalt and manganese and aluminum, and wherein inventive precursors further comprise at least one metal of TM in the oxidation state of zero, for example 0.1 to 10 mol-% referring to TM.

In one embodiment of the present invention, in XRD spectra of inventive precursors, the intensity of the reflex at the angle of $2\theta=20.11\pm0.5°$ divided by the intensity of the peaks at angle $2\theta=8.86\pm0.5°$ and $2\theta=15.08\pm0.5°$ from $MoK\alpha1$ X-Ray diffraction is in the range from 0.01 to 0.25.

In one embodiment of the present invention, inventive precursors are selected from hydroxides and oxyhydroxides of TM wherein TM is a combination of metals according to general formula (I)

$$(Ni_aCo_bMn_c)_{1-d}M_d \qquad (I)$$

with

a being in the range of from 0.6 to 0.95, preferably 80 to 94,
b being in the range of from zero to 0.2, preferably 0.01 to 0.12,
c being in the range of from zero to 0.2, preferably 0.02 to 0.10,
d being in the range of from zero to 0.1,

M is selected from Mg, Al, Ti, Zr, Mo, W, Al, Mg, Nb, and Ta, and combinations of at least two of the foregoing, preferably, M is selected from Mg and Al.

$$a + b + c = 1, \text{ and } c + d > zero.$$

Inventive precursors may contain traces of further metal ions, for example traces of ubiquitous metals such as sodium, calcium, iron or zinc, as impurities but such traces will not be taken into account in the description of the present invention. Traces in this context will mean amounts of 0.05 mol-% or less, referring to the total metal content of TM.

Particulate (oxy)hydroxide of TM is in particulate form. In one embodiment of the present invention, the mean particle diameter (D50) of inventive precursors is in the range of from 2 to 20 $\mu$m, preferably 3 to 16 $\mu$m, more preferably 7 to 14 $\mu$m. The mean particle diameter (D50) in the context of the present invention refers to the median of the volume-based particle diameter, as can be determined, for example, by light scattering. In one embodiment, inventive precursors have a monomodal particle diameter distribution. In other embodiments, the particle distribution of inventive precursors may be bimodal, for example with one maximum in the range of from 1 to 5 $\mu$m and a further maximum in the range of from 7 to 16 $\mu$m. Monomodal is preferred.

In another embodiment of the present invention the mean particle diameter (D50) of inventive precursors is in the range of from 1 to 7 $\mu$m, preferably 2 to 6 $\mu$m, more preferably 3 to 5 $\mu$m. The particle shape of the secondary particles of inventive precursors is preferably spheroidal, that are particles that have a spherical shape. Spheroidal shall include not just those which are exactly spherical but also those particles with a form factor in the range of from 0.7 to 1 and an axis ratio of the bounding box in the range of from 1.00 to 1.25. To determine the axis ratio of the bounding box of a specific particle, the smallest possible, rectangular bounding box is set around the top view SEM image of a particle. The axis ratio is calculated from the length of the two sides a1 and a2 (with a1 $\geq$ a2) by: axis ratio of the bounding box = a1/a2. While a perfect sphere would possess an axis ratio of the bounding box of 1.0, all deviations from perfect sphericity leads to an axis ratio > 1.0.

To determine form factor and axis ratio of samples, both properties are first determined for at least 50 individual particles of each sample and then averaged. The form factor of the individual particles is calculated from the perimeter and area determined from top view SEM images: Form factor = $(4\pi \cdot \text{area})/(\text{perimeter})^2$. While a perfect sphere would possess a form factor of 1.0, any deviation from perfect sphericity leads to form factors less than 1.0.

In one embodiment of the present invention, inventive precursors are comprised of secondary particles that are compose of primary particles. Preferably, said precursor is comprised of spherical secondary particles that are agglomerates of primary particles. Even more preferably, inventive precursor is comprised of spherical secondary particles that are agglomerates of plate-shaped, rod-shaped or needle-shaped primary particles or platelets.

Inventive precursors comprise 0.1 to 10 mol-% referring to TM, of metal in the oxidation state zero, for example nickel, said metal being a constituent of TM. Said metal in the oxidation state of zero and especially nickel is incorporated in the form of small particles of a maximum size of the particulate (oxy)hydroxide itself.

In one embodiment of the present invention, inventive precursors may have a particle diameter distribution span in the range of from 0.5 to 0.9, the span being defined as [(D90) - (D10)] divided by (D50), all being determined by LASER analysis. In another embodiment of the present invention, said precursor may have a particle diameter distribution span in the range of from 1.1 to 1.8.

In one embodiment of the present invention the specific surface (BET) of inventive precursors is in the range of from 2 to 10 m$^2$/g or even 15 to 100 m$^2$/g, determined by nitrogen adsorption, for example in accordance with to DIN-ISO 9277:2003-05.

Preferably, inventive precursors display e.g., in SEM analyses, plate-shaped crystallites that are arranged in a way that their longest axis is in a 90 ($\pm$10) ° angle with respect to the diameter of the secondary particles.

Inventive precursors are advantageously obtained according to the inventive process. They are excellently suited for making cathode active materials. Without wishing to be bound by any theory, we assume that minor amounts of metallic nickel as present in inventive precursors are easily oxidized during the reaction with source of lithium in an oxidizing atmosphere.

The inventive process is advantageously carried out in an apparatus that comprises

(A) a first reaction vessel that comprises a stirrer and a pipe that is connected to
(B) a second reaction vessel that comprises a stirrer and a pipe that is connected
(C) a device for solid-liquid separation selected from filters and centrifuges, and an additional pipe through that the filtrate may be returned to reaction vessel (A).

In one embodiment of the present invention, the said apparatus comprises a group of 2 to 10 first reaction vessels (A) that each comprise a stirrer and a pipe that is connected to reaction vessel (B).

Preferred devices (C) are filters, for example belt filters.

In one embodiment of the present invention, the apparatus in which the inventive process is preferably carried out comprises at least two tank reactors (A) and (B) connected to each other with two pipes that are constructed in a way that slurry or aqueous solution may be transferred from tank reactor (A) to tank reactor (B), and another pipe connected with a device for solid-liquid separation (C), and another pipe for transferring the liquid phase to tank reactor (A), in whole or in part.

In one embodiment of the present invention, the said apparatus additionally contains a buffer device in which slurry from step (b) may be stored before performing step (c), or in which mother liquor may be stored before being returned to reaction vessel (A).

In one embodiment of the present invention, the second reaction vessel (B) is equipped with a device through which liquid phase may be removed, for example a clarifier, a candle filter or a membrane. Said liquid phase may then be returned to reaction vessel (A), in whole or in part. In one version of the present invention, the first reaction vessel (A) is

## EP 4 370 471 B1

embodied as a group of vessels, for example two or three tank reactors. In each reaction vessel of such group a reaction according to step (a) may be carried out, with the same combination of TM or with certain members only. The aqueous reaction media obtained in the various reaction vessels (A) are than combined in order to subject them to the second reaction vessel (B).

The invention is further illustrated by a working example and a drawing.

Brief description of the drawings:

Figure 1:

A: reaction vessel (A), for step (a)
B: reaction vessel (B), for step (b)
C: Solid-liquid separation device to separate precursor from mother liquor (liquid phase)
D: Drying of filter cake
E: Solid-liquid separation to keep non-reacted metal in reaction vessel (B)
F: Solid-liquid separation for liquid phase withdrawal

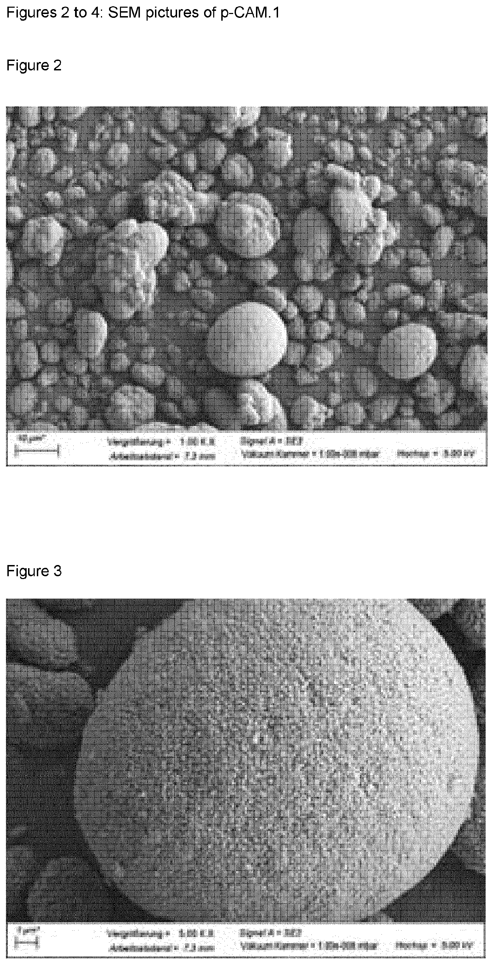

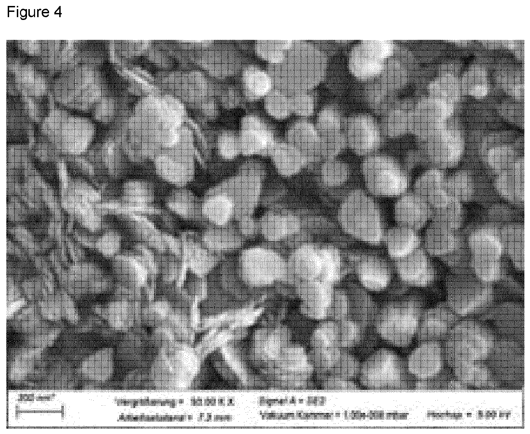

Figures 2 to 4: SEM pictures of p-CAM.1, different scales.

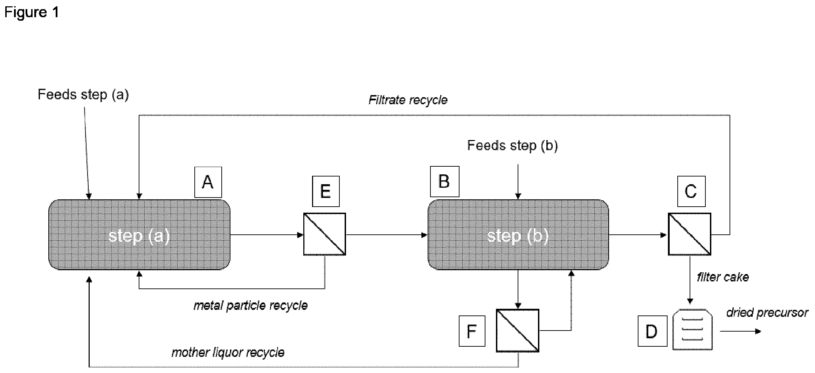

The below reaction is carried out in an apparatus according to the schematic Figure 1. Reaction vessels (A.1) and (B.1) are 3.2-l stirred tank reactors.
rpm: revolutions per minute

Step (a.1): reaction vessel (A.1) is charged with an aqueous solution containing 1M ammonium nitrate and 0.5 M sodium nitrate. The solution is heated to 35°C and the pH value is adjusted to 10.0 by addition of ammonia, and air is bubbled through the solution. Nickel and cobalt metal powder (average particle diameter 0.1 to 1 mm) is added, and the reaction mixture is stirred with 700 rpm. The solids content in reaction vessel (A.1) is 20wt.%. The nickel to cobalt molar ratio in the solid is approx. 20:1. The suspension is filtered in device (E.1). Unreacted metal particles are recycled back into reaction vessel (A.1).

Step (b.1): the liquid phase is fed into reaction vessel (B.1) and heated to 60°C. In addition, nickel/cobalt/manganese hydroxide seeds and an aqueous manganese nitrate solution are fed into reaction vessel (B.1) in a way that the molar ratio Ni:Co:Mn in the liquid is 91:4.5:4.5. The solids content in B is roughly 20wt.%. Nitrogen is bubbled through the slurry in reaction vessel (B.1). The pH value is adjusted to 12 by adding ammonia. Particle-free liquid phase is continuously withdrawn from reaction vessel B.1 by a solid-liquid-separator and fed back into reaction vessel (A.1) to a degree of 90%. In parallel liquid phase withdrawal, the forming suspension is continuously discharged from the reaction vessel (B.1). Residual metal particles are partially removed by magnetic separation. The suspension is then filtered in a filter C.1. The liquid phase is recycled back into reaction vessel (A.1). The filter cake is washed with deionized water and dried at 120 °C for 16 h in D.1 to obtain the inventive precursor P-CAM.1 with molar composition of Ni : Co : Mn = 91:4.5:4.5 and an average particle size (d50) = 11.8 $\mu$m and span = 1.24. P-CAM.1 contains some unreacted nickel.

Powder X-ray Diffraction (PXRD) data is advantageously collected using a laboratory diffractometer (D8 Discover, Bruker AXS GmbH, Karlsruhe). The diffractometer is set up with a Molybdenum X-ray tube. The characteristic K-alpha1 radiation is monochromatized using a bent Germanium Johansson type primary monochromator. Data is collected in the Bragg-Brentano reflection geometry. A LYNXEYE area detector is utilized to collect the scattered X-ray signal.

p-CAM.1 is ground using an IKA Tube Mill and an MT40.100 disposable grinding chamber. The powder was placed in a sample holder and flattened using a glass plate.

P-CAM.1 is mixed with LiOH monohydrate in a molar ratio Li/TM of 1.02 to obtain a mixture. In a muffle oven, the mixture is heated to 760°C and kept for 10 hours in a forced flow of a mixture of oxygen. After cooling to ambient temperature, the powder was deagglomerated and sieved through a 32 $\mu$m mesh to obtain the cathode active material CAM 1. No metallic nickel is detected any more.

The D50 of the electrode active material B-CAM.1 is 11.8 $\mu$m, determined using the technique of LASER diffraction in a Mastersize 3000 instrument from Malvern Instruments.

**Claims**

**1.** Process for making a particulate (oxy)hydroxide of TM wherein TM represents a combination of metals, and wherein

8

TM comprises nickel and at least one metal selected from cobalt and aluminum and manganese, wherein said process comprises the steps of:

(a) combining an aqueous slurry of metallic nickel and at least one metal selected from aluminum and transition metals other than nickel in the presence of ammonia with an oxidant selected from oxygen and nitrate in a first reaction vessel or in a first group of reaction vessels at a temperature of from 5° to 40°C,
(b) transferring aqueous reaction medium from step (a) to a second reaction vessel, wherein said second reaction vessel contains a slurry of a hydroxide of TM, wherein the pH value in step (b) is higher than in step (a) and the temperature is in the range of from 45° to 80°C, thereby forming and growing particles of hydroxide of TM,
(c) removing the particles from step (b) from the liquid by a solid-liquid separation method, and drying the particles,
(d) returning liquid phase obtained in step (c) to the first reaction vessel.

2. Process according to claim 1 wherein the particulate (oxy)hydroxide is selected from hydroxides and oxyhydroxides of TM wherein TM is a combination of metals according to general formula (I)

$$(Ni_aCo_bMn_c)_{1-d}M_d \qquad (I)$$

with

a being in the range of from 0.6 to 0.95,
b being in the range of from zero to 0.2,
c being in the range of from zero to 0.2,
d being in the range of from zero to 0.1,
M is selected from Mg, Al, Ti, Zr, Mo, W, Al, Mg, Nb, and Ta,

$$a + b + c = 1, \text{ and } c + d > \text{zero.}$$

3. Process according to claim 1 or 2 wherein step (a) is performed in the presence of a complexing agent selected from ammonia, borate, polyborate, glycine, tartrate, citrate, and oxalate is present.

4. Process according to any of the preceding claims wherein M is Al and zero $< c \leq 0.1$.

5. Process according to any of the preceding claims wherein between steps (a) and (b), metal particles are removed from the aqueous reaction medium of step (a) by filtration or sedimentation or magnetic separation and returned to the first reaction vessel.

6. Process according to any of the preceding claims wherein step (b) is performed under an atmosphere that contains up to 500 ppm $O_2$.

7. Process according to any of the preceding claims wherein step (a) is performed in the absence of oxygen.

8. Process according to any of the preceding claims wherein in step (b), a compound of manganese or aluminum is added.

9. Process according to any of the preceding claims wherein in step (d), 80 to 95 vol.-% of the liquid phase from step (c) is returned to the first reaction vessel.

10. Process according to any of the preceding claims wherein steps (a) and (b) are both performed without addition of alkali metal hydroxide.

11. Process according to any of the preceding claims wherein the pH value in step (a) is in the range of from 7.0 to 10.0 and the pH value in step (b) is in the range of from 9.0 to 13.0.

12. Particulate (oxy)hydroxide of TM, wherein TM comprises nickel and at least one metal selected from cobalt and manganese and aluminum, and wherein said particulate (oxy)hydroxide of TM further comprises 0.1 to 10 mol-% referring to TM of metal TM in the oxidation state of zero.

13. Particulate (oxy)hydroxide according to claim 12 comprising 0.1 to 10 mol-% of metal in the oxidation state zero, wherein said metal is nickel and wherein percentages refer to TM.

**Patentansprüche**

1. Verfahren zur Herstellung eines partikulären (Sauerstoff)hydroxids aus TM, wobei TM eine Kombination von Metallen darstellt und wobei TM Nickel und mindestens ein Metall umfasst, ausgewählt aus Kobalt und Aluminium und Mangan, wobei das Verfahren die Schritte umfasst:

   (a) Kombinieren einer wässrigen Aufschlämmung aus metallischem Nickel und mindestens einem Metall, ausgewählt aus Aluminium und Übergangsmetallen außer Nickel, in Gegenwart von Ammoniak mit einem aus Sauerstoff und Nitrat ausgewählten Oxidationsmittel in einem ersten Reaktionsgefäß oder in einer ersten Gruppe von Reaktionsgefäßen bei einer Temperatur von 5 °C bis 40 °C,
   (b) Übertragen von wässrigem Reaktionsmedium von Schritt (a) in ein zweites Reaktionsgefäß, wobei das zweite Reaktionsgefäß eine Aufschlämmung eines Hydroxids von TM enthält, wobei der pH-Wert in Schritt (b) höher ist als in Schritt (a) und die Temperatur im Bereich von 45° bis 80°C liegt, wodurch Partikel aus Hydroxid von TM gebildet und gezüchtet werden,
   (c) Entfernen der Partikel aus Schritt b) aus der Flüssigkeit durch ein Fest-Flüssig-Trennverfahren und Trocknen der Partikel,
   (d) Rückführung der in Schritt c erhaltenen flüssigen Phase in das erste Reaktionsgefäß.

2. Verfahren nach Anspruch 1, wobei das partikuläre (Oxy)hydroxid aus Hydroxiden und Oxyhydroxiden von TM ausgewählt wird, wobei TM eine Kombination von Metallen nach der allgemeinen Formel (I) ist

$$(Ni_aCo_bMn_c)_{1-d}M_d \qquad (I)$$

   wobei

   a im Bereich von 0,6 bis 0,95 liegt,
   b im Bereich von Null bis 0,2 liegt,
   c im Bereich von Null bis 0,2 liegt,
   d im Bereich von Null bis 0,1 liegt,
   M wird ausgewählt aus Mg, Al, Ti, Zr, Mo, W, Al, Mg, Nb und Ta,

$$a + b + c = 1 \text{ und } c + d > \text{Null}.$$

3. Verfahren nach Anspruch 1 oder 2, wobei Schritt (a) in Gegenwart eines Komplexbildners durchgeführt wird, ausgewählt aus Ammoniak, Borat, Polyborat, Glycin, Tartrat, Citrat und Oxalat.

4. Verfahren nach einem der vorhergehenden Ansprüche, wobei M Al und Null $< c \leq 0,1$ ist.

5. Verfahren nach einem der vorhergehenden Ansprüche, wobei zwischen den Schritten (a) und (b) Metallpartikel aus dem wässrigen Reaktionsmedium des Schritts (a) durch Filtration oder Sedimentation oder magnetische Trennung entfernt und in das erste Reaktionsgefäß zurückgeführt werden.

6. Verfahren nach einem der vorhergehenden Ansprüche, wobei Schritt (b) unter einer Atmosphäre durchgeführt wird, die bis zu 500 ppm O2 enthält.

7. Verfahren nach einem der vorhergehenden Ansprüche, wobei der Schritt (a) unter Abwesenheit von Sauerstoff durchgeführt wird.

8. Verfahren nach einem der vorhergehenden Ansprüche, wobei in Schritt (b) eine Verbindung aus Mangan oder Aluminium zugegeben wird.

9. Verfahren nach einem der vorhergehenden Ansprüche, wobei in Schritt (d) 80 bis 95 Vol.-% der flüssigen Phase aus Schritt (c) in das erste Reaktionsgefäß zurückgeführt werden.

10. Verfahren nach einem der vorhergehenden Ansprüche, wobei die Schritte (a) und (b) beide ohne Zusatz von Alkalimetallhydroxid durchgeführt werden.

11. Verfahren nach einem der vorhergehenden Ansprüche, wobei der pH-Wert in Schritt (a) im Bereich von 7,0 bis 10,0 und der pH-Wert in Schritt (b) im Bereich von 9,0 bis 13,0 liegt.

12. Partikel(oxy)hydroxid von TM, wobei TM Nickel und mindestens ein Metall umfasst, ausgewählt aus Kobalt und Mangan und Aluminium, und wobei das partikuläre (Oxy)hydroxid von TM weiterhin 0,1 bis 10 mol-% umfasst, bezogen auf TM des Metalls TM in der Oxidationsstufe von Null.

13. Partikel(oxy)hydroxid nach Anspruch 13 mit einem Gehalt von 0,1 bis 10 Mol-% Metall in der Oxidationsstufe Null, wobei das Metall Nickel ist und wobei sich die Prozentsätze auf TM beziehen.

**Revendications**

1. Procédé de fabrication d'un hydroxyde (oxy)particulaire de TM, dans lequel TM représente une combinaison de métaux, et dans lequel TM comprend du nickel et au moins un métal choisi parmi le cobalt, l'aluminium et le manganèse, dans lequel ledit procédé comprend les étapes de :

   (a) combiner une suspension aqueuse de nickel métallique et d'au moins un métal choisi parmi l'aluminium et les métaux de transition autres que le nickel en présence d'ammoniac avec un oxydant choisi parmi l'oxygène et le nitrate dans un premier récipient de réaction ou dans un premier groupe de récipients de réaction à une température comprise entre 5° et 40°C,
   (b) transfert d'un milieu réactionnel aqueux de l'étape (a) à un second récipient de réaction, dans lequel ledit second récipient de réaction contient une boue d'hydroxyde de TM, dans lequel la valeur du pH à l'étape (b) est supérieure à celle de l'étape (a) et la température est dans la plage de 45° à 80°C, formant et développant ainsi des particules d'hydroxyde de TM,
   (c) retirer les particules de l'étape (b) du liquide par une méthode de séparation solide-liquide, et sécher les particules,
   (d) retour de la phase liquide obtenue à l'étape (c) dans le premier récipient de réaction.

2. Procédé selon la revendication 1, dans lequel l'(oxy)hydroxyde particulaire est choisi parmi les hydroxydes et les oxyhydroxydes de TM, dans lequel TM est une combinaison de métaux selon la formule générale (I)

$$(Ni_aCo_bMn_c)_{1-d}M_d \qquad (I)$$

avec

   a étant compris entre 0,6 et 0,95,
   b étant dans la gamme de zéro à 0,2,
   c étant dans la gamme de zéro à 0,2,
   d étant dans la gamme de zéro à 0,1,
   M est choisi parmi Mg, Al, Ti, Zr, Mo, W, Al, Mg, Nb et Ta,

$$a + b + c = 1, \text{ et } c + d > z\acute{e}ro.$$

3. Procédé selon la revendication 1 ou 2, dans lequel l'étape (a) est réalisée en présence d'un agent complexant choisi parmi l'ammoniac, le borate, le polyborate, la glycine, le tartrate, le citrate et l'oxalate.

4. Procédé selon l'une quelconque des revendications précédentes, dans lequel M est Al et zéro $< c \le 0,1$.

5. Procédé selon l'une quelconque des revendications précédentes, dans lequel entre les étapes (a) et (b), les particules métalliques sont éliminées du milieu réactionnel aqueux de l'étape (a) par filtration, sédimentation ou séparation magnétique et renvoyées dans le premier récipient de réaction.

6. Procédé selon l'une quelconque des revendications précédentes, dans lequel l'étape (b) est réalisée sous une atmosphère contenant jusqu'à 500 ppm d'O2.

7. Procédé selon l'une quelconque des revendications précédentes, dans lequel l'étape (a) est réalisée en l'absence d'oxygène.

8. Procédé selon l'une quelconque des revendications précédentes, dans lequel à l'étape (b), un composé de manganèse ou d'aluminium est ajouté.

9. Procédé selon l'une quelconque des revendications précédentes, dans lequel, à l'étape (d), 80 à 95 % en volume de la phase liquide de l'étape (c) sont renvoyés dans le premier récipient de réaction.

10. Procédé selon l'une quelconque des revendications précédentes, dans lequel les étapes (a) et (b) sont toutes deux réalisées sans ajout d'hydroxyde de métal alcalin.

11. Procédé selon l'une quelconque des revendications précédentes, dans lequel la valeur du pH à l'étape (a) est comprise entre 7,0 et 10,0 et la valeur du pH à l'étape (b) est comprise dans la plage de 9,0 à 13,0.

12. (Oxy)hydroxyde particulaire de TM, dans lequel TM comprend du nickel et au moins un métal choisi parmi le cobalt, le manganèse et l'aluminium, et dans lequel ledit (oxy)hydroxyde particulaire de TM comprend en outre 0,1 à 10 % molaire se référant à TM de métal TM à l'état d'oxydation de zéro.

13. (Oxy)hydroxyde particulaire selon la revendication 13 comprenant 0,1 à 10 % molaire de métal à l'état d'oxydation zéro, dans lequel ledit métal est du nickel et dans lequel les pourcentages se réfèrent à TM.

Figure 1

Figures 2 to 4: SEM pictures of p-CAM.1

Figure 2

Figure 3

Figure 4

**EP 4 370 471 B1**

**Patent documents cited in the description**

- EP 1189296 A
- WO 2020175925 A1
- WO 2019191837 A